# EUROPÄISCHE PATENTSCHRIFT

(11) **EP 3 775 602 B1**
(45) Veröffentlichungstag und Bekanntmachung des Hinweises auf die Patenterteilung: **24.01.2024**
(21) Anmeldenummer: 19735526.6
(22) Anmeldetag: 27.06.2019
(51) Int. Cl.: F16D 69/02, F16D 65/12, C22C 21/00

(54) **VERWENDUNG VON REIBBELÄGEN FÜR ALUMINIUMBREMSSCHEIBEN**
USE OF FRICTION LININGS FOR ALUMINUM BRAKE DISCS
UTILISATION DES GARNITURES DE FRICTION POUR DISQUES DE FREIN EN ALUMINIUM

(43) Veröffentlichungstag der Anmeldung: 17.02.2021
(73) Patentinhaber: TMD Friction Services GmbH, 51381 Leverkusen (DE)
(72) Erfinder: WELP, Dirk, 45239 Essen (DE)
(74) Vertreter: Müller, Eckhard
(86) Internationale Anmeldenummer: PCT/EP2019/067261
(87) Internationale Veröffentlichungsnummer: WO 2020/259844

(56) Entgegenhaltungen:
- CN-A- 106 812 837
- US-A1- 2004 175 544
- US-A1- 2012 058 363

## Beschreibung

Die vorliegende Erfindung betrifft die Verwendung von Bremsbelägen mit Reibbelägen, die besonders für den Einsatz bei Scheibenbremsen mit Aluminiumbremsscheiben oder -rotoren geeignet sind. Insbesondere betrifft die Erfindung die Verwendung von Bremsbelägen mit Reibbelägen, die Aluminium in Form einer Aluminiumlegierung enthalten, in Kombination mit Aluminium haltigen Bremsscheiben oder Rotoren.

Im Zuge der deutlich vermehrten Einführung von Fahrzeugen, insbesondere Personenkraftwagen, mit Rekuperation ist in der Autoindustrie der Gedanke an die Verwendung von Aluminium als Material für oder als Bestandteil von Bremsscheiben wieder in den Vordergrund gerückt. Da die thermische Belastung der Bremsscheiben bei den genannten Fahrzeugen nicht mehr die Werte bei konventionellen Antrieben erreicht, kann die Verwendung von Aluminium bei Bremsscheiben nicht nur in Gewichtsvorteilen resultieren.

Im Stand der Technik sind verschiedene Reibbelagsrezepturen beschrieben, die als geeignet für den Einsatz in Kombination mit Aluminiumbremsscheiben bezeichnet werden.

So beschreibt DE 694 03 791 T2 eine Reibbelagszusammensetzung für einen Rotor aus Aluminium-Metallverbundgrundmasse, welche einen Abbau des Rotors beim Bremsvorgang verhindern soll. Dabei soll ferner ein durchschnittlicher Reibungskoeffizient von 0,38-0,42 eingestellt werden. Diese Reibbelagsmischung enthält 2-12 Gew.-% poröses Kupferpulver zur Verringerung des Verschleißes zwischen Aluminiumrotor und Reibbelag.

DE 695 13 634 T2 beschreibt eine Reibbelagsmischung für das gleiche Einsatzgebiet, welche 5-80 Vol.-% fein verteiltes Aluminiumoxid einer speziellen Teilchengröße enthalten muss.

WO 94/15112 betrifft einen Bremsbelag für Scheibenbremsen mit Aluminiumbremsscheiben, dessen Zusammensetzung so bestimmt werden soll, dass der Reibwert bis zu einer Temperatur von 400°C gleichbleibend hoch ist und im Bereich bis 450°C deutlich absinkt.

Auch aluminiumhaltige Reibbeläge sind im Stand der Technik bekannt.

WO 2015/193361 A1 offenbart ein kupferfreies Reibmaterial, welches Fasern einer Al-Mg-Legierung, wie z. B. AIMg5, zu 5-9,75 Gew.-% enthält.

DE 198 28 301 A1 bezieht sich auf einen Reibbelag, der eine Al-Zn-Legierung, z.B. AlZn5, zu 0,5 bis 15 Gew.-% enthält und dadurch Korrosionsschutzeigenschaften aufweist.

Reibbeläge, welche mehr als 90 Gew.-% Al-Metall(pulver) und/oder Al-Legierungen enthalten können, werden in KR 10 2001 009 1694 beschrieben.

CN 104265816 offenbart einen Reibbelag, der 20-30 Gew.-% einer Al-Legierung und Siliziumcarbid (SiC) aufweist. Dabei dient die Al-Legierung als Ersatz für Stahlfasern in der Reibbelagsmischung und führt zu verbesserten Reib-, Verschleiß- und Temperatureigenschaften.

CN 106 812 837 A offenbart eine Bremsscheibe, deren Oberfläche mit einem Reibmaterial überzogen ist. Dabei handelt es sich um ein partikelverstärktes Verbundmaterial auf Aluminiumbasis.

US 2004/175 544 A1 bezieht sich auf ein NAO-Reibmaterial für Trommeln und Rotoren aus einer Aluminiumlegierung. Das Reibmaterial umfasst neben Fasern und Bindemittel auch einen Füllstoff mit einer metallischen Komponente, die bevorzugt aus Aluminiumpulver und Al-Legierungen besteht.

Schließlich beschreibt US 2012/0058363 A1 eine beschichtete Metallscheibe, welche aus eine Trägerscheibe aus einer Al-Legierung und eine darauf gebrachte Reinschicht umfasst.

Zusammenfassend kann festgehalten werden, dass für den Einsatz in Verbindung mit Aluminiumbremsscheiben oder -rotoren im Stand der Technik in der Regel kupferhaltige Reibbeläge vorgeschlagen werden. Kupfer ist jedoch von verschiedenen Umweltbehörden als Schwermetall und damit als nicht umweltverträglich eingestuft worden, wodurch ein Trend zu kupferfreien Brems- oder Reibbelägen feststellbar geworden ist. Allerdings zeigen kupferfreie Reibbeläge auf Aluminiumscheiben in der Regel einen sehr geringen Reibwert von ca. 0,3.

Die beschriebenen Al-haltigen Reibbeläge werden meist für den Einsatz in Verbindung mit herkömmlichen Bremsscheiben (Gusseisen, Stahl) beschrieben, wobei der Einsatz von Aluminium oder Aluminiumlegierungen z.B. den Ersatz von Stahlfasern in solchen Belägen oder eine Verbesserung der Korrosionsschutzeigenschaften dieser Beläge bewirken soll.

Schließlich ist im Stand der Technik allgemein bekannt, dass Reibbeläge, welche für den Gebrauch mit Gusseisenrotoren verwendet werden, bei Rotoren auf Aluminiumgrundlage nicht verwendbar sind, da die Abriebstoffe von solchen Reibbelägen einen Rotor auf Aluminiumgrundlage verkratzen und letztlich ein stabiler Reibungskoeffizient so nicht erreicht wird.

Der vorliegenden Erfindung lag daher die Aufgabe zugrunde, Reibbeläge bzw. Bremsbeläge zur Verfügung zu stellen, die in Kombination mit Al-haltigen Bremsscheiben oder Rotoren einen ausreichend hohen Reibungswert sicherstellen und gleichzeitig bzgl. Abriebs-, Verschleiß- und Temperatureigenschaften die Nachteile der Reibbeläge aus dem Stand der Technik nicht oder nur in deutlich reduziertem Maß aufweisen.

Im Sinne der vorliegenden Erfindung werden unter dem Begriff aluminiumhaltige Bremsscheiben oder Rotoren allgemein solche Bremsscheiben oder Rotoren verstanden, die Aluminium in Form von Metall oder in Form von Aluminiumlegierungen enthalten oder daraus bestehen. Als neuere Werkstoffe für Bremsscheiben und Rotoren gelten sogenannte Aluminium-Metallverbundgrundmassen (AI-MMC = aluminum metal matrix composites), welche eine Art Aluminiumlegierung mit entweder teilchenförmiger oder faserartiger Verstärkung darstellen. Durch diese Verstärkungen/Bestandteile werden die Festigkeit und Härte einer Aluminiumgrundlegierung deutlich erhöht. Als Verstärkungsmaterial wird dabei bevorzugt SiC (10 bis 90 Vol.-%) verwendet, doch sind Aluminiumoxid und andere keramische Materialien ebenfalls verwendbar.

Die Konzentration von Aluminium in Bremsscheiben des Standes der Technik, wie diese auch bei der vorliegenden Erfindung einsetzbar sind, liegt in der Regel bei 20-60 Vol.-% (AI als Metall), insbesondere bei ca. 40 Vol.-%.

Gelöst wird die erfindungsgemäße Aufgabe durch den Einsatz von Aluminiumlegierungen bei der Herstellung von Reibbelägen. Bei den Aluminiumlegierungen sind niedrig legierte Al-Legierungen bevorzugt. Dabei können verschleißfeste Al-Legierungen positive Auswirkungen auf das Reibverhalten der so ausgestatteten Reibbeläge haben. Dies gilt insbesondere für Legierungen mit erhöhter Temperaturfestigkeit.

Bevorzugt wird dabei eine Konzentration von mindestens 5 Gew.-% bis zu 30 Gew.-%, wobei auch höhere Aluminiumkonzentrationen möglich sind. Dabei beziehen sich die Angaben in Gew.-% auf den Anteil von Aluminium (als Metall ausgedrückt, Al-Legierungen werden entsprechend auf den Al-Gehalt umgerechnet) in der fertigen Reibbelagsmischung, aus der dann der Reibbelag nach den üblichen, im Stand der Technik bekannten Verfahren hergestellt wird. Bevorzugte Konzentrationen von Aluminium in den Reibbelägen betragen 5-25 Gew.-%, insbesondere 10-20 Gew.-%.

Als besonders geeignet zur Lösung der vorliegenden Aufgabe haben sich Al-Legierungen mit Magnesium (Mg) oder Titan (Ti) erwiesen. Auch andere Legierungspartner, wie z.B. Silizium (Si), sind grundsätzlich geeignet. Dabei kann es sich um binäre, ternäre oder quaternäre Legierungssysteme handeln, von denen die binären Aluminiumlegierungen besonders bevorzugt sind. Diese binären Systeme vom Typ AlₓZ_{y} (mit Z bevorzugt gleich Mg oder Ti und x = 10-90 Gew-% und y = 10-90 Gew.%) haben sich als besonders geeignet erwiesen. Insbesondere sind hier Legierungen wie AITi10 und AIMg50 zu nennen.

Die Herstellung der Legierungen erfolgt durch Aufschmelzen und Homogenisieren der Komponenten zu einem feindispersen System. Eine Vielzahl solcher Legierungen ist im Handel erhältlich.

Der Anteil der erfindungsgemäßen Legierungen an der Reibbelagsmischung bzw. dem fertigen Reibbelag kann bevorzugt von 5 bis 30 Gew.-%, insbesondere von 10 bis 20 Gew.-%, betragen. Diese Legierungen sind in allen gängigen Reibbelägen einsetzbar. Eine besondere Anpassung der übrigen Komponenten des Reibbelags an die hier beschriebenen Legierungen ist somit nicht erforderlich. In den Mischungen des Standes der Technik wird z.B. bevorzugt lediglich die Zn- oder Zn- Legierungskomponente durch die erfindungsgemäßen Legierungen ersetzt. Der Gewichtsanteil der Al-Legierungen in der Reibbelagsmischung richtet sich nach dem gewünschten Al-Gehalt.

Die erfindungsgemäß verwendbaren Legierungen werden bevorzugt in Pulver - oder Partikelform in die Reibbelagsmischung eingebracht. Als Schmierstoff können Zinnsulfide mit einem Gewichtsanteil zwischen ca. 0,5 bis 10 Gew.-%, vorzugsweise ca. 2 bis 8 Gew.-%, enthalten sein.

Zum Herstellen des Reibbelags ist vorgesehen, die vorzugsweise in Strang- oder Blockform vorliegenden Aluminium-Legierungen zunächst zu verflüssigen und anschließend zu verdüsen, um im Wesentlichen kugelförmige Partikel herzustellen. Diese Partikel werden dann mit einer üblichen Reibmaterialmischung bzw. mit den Komponenten einer üblichen Reibbelagsmischung vermischt und bei bekannten Temperaturen und Drücken zu einem Reibbelag verpresst.

Es können aber auch direkt aus der Schmelze der Legierung pulverförmige Partikel gebildet werden, z.B. durch Verdüsen oder durch Schleudern über den Rand einer rotierenden Scheibe. Die Partikelgröße der erfindungsgemäßen Legierungen liegt bevorzugt im Bereich von 100µm und 700µm. Auch sind Aluminiumlegierungen mit weiteren Metallen, wie z.B. AI/Mg-Legierungen, in Partikelform im Handel erhältlich.

Als Füllstoffe für erfindungsgemäß verwendbare Reibbeläge können einzeln oder in Kombination mit anderen Füllstoffen, Metalloxide, Metallsilikate und/oder Metallsulfate enthalten sein. Die faserigen Substanzen bestehen vorzugsweise aus Aramidfasern und/oder anderen organischen oder anorganischen Fasern. Als Metalle können außer der Aluminium-Legierung beispielsweise Stahlwolle und/oder Kupferwolle enthalten sein.

Als Schmierstoffe werden vorzugsweise Zinnsulfide mit einem Gewichtsanteil von 0,5 bis 10 Gew.-%, vorzugsweise 2 bis 8 Gew.-%, verwendet. Die Zinnsulfide können beispielsweise als Pulver der Reibbelagsmischung beigefügt werden.

Die erfindungsgemäß verwendbaren Legierungen können grundsätzlich in jeder beliebigen Reibbelagsmischung verwendet werden. Die Herstellung der erfindungsgemäßen Reibbeläge kann nach konventionellen und aus dem Stand der Technik bekannten Methoden erfolgen, d.h. durch Mischen aller Ausgangskomponenten und Verpressen der so erhaltenen Reibbelagsmischung bei erhöhtem Druck und erhöhter Temperatur. Dabei wird die Al-Legierung im typischen Anwendungsfall als Pulver mit den übrigen Mischungsbestandteilen in einen Mischer gegeben, wodurch beim Mischvorgang die Legierungspartikel homogen in dem Reibmaterial verteilt werden. Dies bedeutet weiterhin, dass durch den Reibprozess beim Einsatz eines entsprechenden Bremsbelags immer neues Al-haltiges Material an die Reibbelagsoberfläche gelangt. Dadurch herrschen während des Anwendungszyklus des Reibbelags auf dessen Oberfläche immer einheitliche oder konstante Bedingungen.

Mit den erfindungsgemäß verwendbaren Reibbelägen können in Kombination mit Al-haltigen Bremsscheiben oder Rotoren ausreichend hohe Reibwerte, z.B. von 0,35 - 0,4, bei gleichzeitig geringem Verschleiß an den Bremsscheibe/Rotor erzielt werden.

### Beispiel

Eine erfindungsgemäße Reibmaterialmischung kann beispielsweise wie folgt zusammengesetzt sein:

| Rohstoffe | Gew.-% |
|---|---|
| Aluminium-Mg/Ti-Legierung | 10-20 (>5 Gew.-% AI) |
| Aluminiumoxid | 0,5-2 |
| Glimmermehl | 5-8 |
| Schwerspat | 5-30 |
| Eisenoxid | 5-15 |
| Zinnsulfide | 2-8 |
| Graphit | 2-6 |
| Kokspulver | 10-20 |
| Aramidfaser | 1-25 |
| Harzfüllstoffpulver | 2-6 |
| Bindeharz | 3-7 |

Weiterhin können erfindungsgemäß verwendbare Mischungen neben Aluminium in Form einer Legierung z.B. auch Stahl/Stahlwolle, Kupfer und/oder Kupferlegierungen enthalten.

Die vorliegende Erfindung betrifft somit die Verwendung der erfindungsgemäßen Al-Legierungen für Reibbeläge zur Benutzung in Kombination mit aluminiumhaltigen Bremsscheiben und Rotoren.

## Patentansprüche

1. Verwendung von Bremsbelägen, welche Reibbeläge aufweisen, die mehr als 5 Gew.-% Aluminium in Form einer Aluminiumlegierung enthalten, in Kombination mit aluminiumhaltigen Bremsscheiben oder Rotoren, wobei eine Al-Legierung der Formel AlₓZ_{y}, worin Z für Mg und/oder Ti und/oder Si steht und x und y jeweils Bereiche von 10 bis einschließlich 90 Gew.-% bedeuten, verwendet wird.

2. Verwendung nach Anspruch 1, **dadurch gekennzeichnet, dass** die Reibbeläge 5-30 Gew.-% Aluminium, insbesondere 5-25 Gew.-% Aluminium, besonders bevorzugt 10-20 Gew-% Aluminium, enthalten.

3. Verwendung nach einem der Ansprüche 1 bis 2, **dadurch gekennzeichnet, dass** es sich bei der Al-Legierung um eine binäre Al-Mg-Legierung oder eine Al-Ti-Legierung handelt.

4. Verwendung nach einem der Ansprüche 1 bis 2, **dadurch gekennzeichnet, dass** es sich bei der Al-Legierung um eine ternäre oder quaternäre Legierung handelt, welche Mg und/oder Ti und/oder Si enthält und bei der y für die Summe der Anteile der Komponente Z steht.

5. Verwendung nach Anspruch 3, **dadurch gekennzeichnet, dass** es sich bei der binären Al-Legierung um AlTi10 oder um AIMg50 handelt.

6. Verwendung nach einem der Ansprüche 1 bis 5, **dadurch gekennzeichnet, dass** die Al-Legierung in Partikelform vorliegt und eingesetzt wird.

7. Verwendung nach Anspruch 6, **dadurch gekennzeichnet, dass** die Partikel eine Größe von 100 - 700 µm aufweisen.

8. Verwendung nach einem der Ansprüche 1 bis 7, **dadurch gekennzeichnet, dass** die Bremsscheiben oder Rotoren Aluminium zu 20-60 Vol.-%, insbesondere zu ca. 40 Vol.-%, enthalten

## Claims

1. Use of brake pads comprising friction materials containing more than 5% by weight of aluminium in the form of an aluminium alloy in conjunction with aluminium-containing brake discs or rotors, wherein the Al alloy employed is one of formula AlₓZ_{y}, wherein Z represents Mg and/or Ti and/or Si and x and y are in each case ranges from 10% to 90% by weight inclusive.

2. Use according to Claim 1, **characterized in that** the friction materials contain 5-30% by weight of aluminium, in particular 5-25% by weight of aluminium, particularly preferably 10-20% by weight of aluminium.

3. Use according to either of Claims 1 and 2, **characterized in that** the Al alloy is a binary Al-Mg alloy or an Al-Ti alloy.

4. Use according to either of Claims 1 and 2, **characterized in that** the Al alloy is a ternary or quaternary alloy which contains Mg and/or Ti and/or Si and in which y represents the sum of the proportions of component Z.

5. Use according to Claim 3, **characterized in that** the binary Al alloy is AITi10 or AIMg50.

6. Use according to any of Claims 1 to 5, **characterized in that** the Al alloy is present and employed in particle form.

7. Use according to Claim 6, **characterized in that** the particles have a size of 100-700 µm.

8. Use according to any of Claims 1 to 7, **characterized in that** the brake discs or rotors contain aluminium to an extent of 20-60% by volume, in particular to an extent of about 40% by volume.

## Revendications

1. Utilisation de garnitures de frein qui comprennent des garnitures de friction qui contiennent plus de 5 % en poids d'aluminium sous forme d'un alliage d'aluminium, en combinaison avec des disques de frein ou des rotors contenant de l'aluminium, pour laquelle on utilise un alliage d'AI de formule AlₓZ_{y} dans laquelle Z représente Mg et/ou Ti et/ou Si et x et y désignent chacun une plage de 10 jusqu'à et y compris 90 % en poids.

2. Utilisation selon la revendication 1, **caractérisée en ce que** les garnitures de friction contiennent 5 à 30 % en poids d'aluminium, en particulier 5 à 25 % en poids d'aluminium, d'une manière particulièrement préférée 10 à 20 % en poids d'aluminium.

3. Utilisation selon l'une des revendications 1 à 2, **caractérisée en ce que** l'alliage d'AI est un alliage binaire Al-Mg ou un alliage AI-Ti.

4. Utilisation selon l'une des revendications 1 à 2, **caractérisée en ce que** l'alliage d'AI est un alliage ternaire ou quaternaire, qui contient du Mg et/ou du Ti et/ou du Si, et dans lequel y représente la somme des proportions des composants Z.

5. Utilisation selon la revendication 3, **caractérisée en ce que** l'alliage binaire d'AI est AlTi10 ou AIMg50.

6. Utilisation selon l'une des revendications 1 à 5, **caractérisée en ce que** l'alliage d'AI se présente et est utilisé sous forme de particules.

7. Utilisation selon la revendication 6, **caractérisée en ce que** les particules présentent une grosseur de 100 à 700 µm.

8. Utilisation selon l'une des revendications 1 à 7, **caractérisée en ce que** les disques de frein ou les rotors contiennent de l'aluminium à raison de 20 à 60 % en volume, en particulier de 40 % en volume.
